# EUROPÄISCHE PATENTSCHRIFT

(11) **EP 1 101 103 B1**
(45) Veröffentlichungstag und Bekanntmachung des Hinweises auf die Patenterteilung: **09.09.2015**
(21) Anmeldenummer: 99948697.0
(22) Anmeldetag: 27.07.1999
(51) Int. Cl.: G01N 27/406

(54) **ABGASSONDE, BEI DER DIE DEN HEIZER VOM FESTELEKTROLYTEN TRENNENDE ISOLATIONSSCHICHT DURCH SINTERN EINES MIT PORENBILDNER VERSETZTEN AL2O3-HALTIGEN MATERIALS GEBILDET WIRD**
EXHAUST GAS SENSOR IN WHICH THE INSULATION LAYER SEPARATING THE HEATER FROM THE SOLID ELECTROLYTE IS FORMED BY SINTERING A MATERIAL CONTAINING AL2O3 CHARGED WITH A PORE FORMING MATERIAL
SONDE POUR GAZ D'ECHAPPEMENT, DANS LAQUELLE LA COUCHE D'ISOLATION SEPARANT L'ELEMENT CHAUFFANT DE L'ELECTROLYTE EST FORMEE PAR FRITTAGE D'UN MATERIAU RENFERMANT DE L'AL2O3 ET UN AGENT POROGENE

(30) Priorität: 30.07.1998 DE 19834276
(43) Veröffentlichungstag der Anmeldung: 23.05.2001
(73) Patentinhaber: ROBERT BOSCH GMBH, 70442 Stuttgart (DE)
(72) Erfinder: SCHNEIDER, Jens, Stefan, Anderson, SC 29621 (US); HEIMANN, Detlef, D-70839 Gerlingen (DE); RENZ, Hans-Joerg, D-70771 Leinfelden-Echterdingen (DE); NEUMANN, Harald, D-71665 Vaihingen (DE); SCHUMANN, Bernd, D-71277 Rutesheim (DE); DIEHL, Lothar, D-70499 Stuttgart (DE)
(86) Internationale Anmeldenummer: PCT/DE1999/002295
(87) Internationale Veröffentlichungsnummer: WO 2000/007006

(56) Entgegenhaltungen:
- EP-A- 0 203 351
- EP-A- 0 832 865
- WO-A1-88/01610
- DE-A- 4 107 869
- DE-A- 4 439 883
- DE-A1- 4 305 930
- DE-A1- 4 343 315
- DE-A1- 19 700 700
- DE-A1- 19 715 193
- DE-A1- 19 853 601
- DE-C1- 3 809 154
- JP-A- H02 190 758
- JP-A- 2000 338 078
- US-A- 4 209 377
- US-A- 4 610 741
- US-A- 5 302 275
- US-A- 5 447 618
- US-A- 5 516 410
- Michael Droeschel ET AL: "Grundlegende Untersuchung zur Eignung poröser Keramiken als Verdampferbauteile", Elektronisches Volltextarchiv EVA, 1 January 1998 (1998-01-01), XP055096937, DE Retrieved from the Internet: URL:http://digbib.ubka.uni-karlsruhe.de/vo lltexte/documents/3139 [retrieved on 2014-01-16]
- "Americas Regional Product Data Superground A152 Aluminas for Ceramic Applications", ALMATIS, 1 January 2013 (2013-01-01), pages 01-02, XP055096938, Retrieved from the Internet: URL:http://www.almatis.com/media/4030/rp-a m_009_superground_a152_0608.pdf [retrieved on 2014-01-16]

## Beschreibung

Die Erfindung betrifft eine Abgassonde mit den Merkmalen des Oberbegriffs des Anspruchs 1.

### Stand der Technik

Derartige Sonden sind als Lambdasonden für Kraftfahrzeuge allgemein bekannt. Die Funktion dieser Sonden beruht auf der Messung eines Stroms von Sauerstoffionen, die durch eine dielektrische Schicht zwischen zwei Meßelektroden diffundieren. Als Material für eine solche dielektrische Schicht wird ZrO₂ verwendet. Ein Heizelement in Form einer dünnen Leiterbahnschicht dient zum Erhitzen der dielektrischen Schicht auf eine Temperatur von mehreren hundert Grad Celsius.

Es hat sich als nicht empfehlenswert erwiesen, den gesamten Körper der Abgassonde aus Zirkonoxyd aufzubauen, da dies zu hohen Leckströmen zwischen den Meßelektroden und der Leiterbahnschicht durch Wanderung von Sauerstoffionen des Zr0₂ führt, durch die die Lebensdauer der Leiterbahnschicht und damit die des gesamten Sensors empfindlich beeinträchtigt wird. Es hat sich als günstig erwiesen, die Leiterbahnschicht nicht in direktem Kontakt mit dem ZrO₂ zu bringen, sondern dazwischen eine im wesentlichen aus Al₂O₃ bestehende Schicht vorzusehen, in der keine Sauerstoffionenwanderung auftritt.

Die Fertigung einer Abgassonde durch gemeinsames Sintern von Schichten aus Zr0₂ und Al₂0₃ wirft jedoch Schwierigkeiten auf, da die Sintertemperaturen wie auch die Schrumpfungsraten beim Sintern bei beiden Materialien unterschiedlich sind. Dies führt zu einer schlechten Reproduzierbarkeit der Ergebnisse des Sintervorgangs und infolgedessen zu einer großen Gefahr, daß Ausschuß produziert wird. Die unterschiedlichen Schrumpfungsraten von Zirkonoxyd und Aluminiumoxyd haben ferner die Folge, daß Sensoren mit einer unsymmetrischen Schichtstruktur dazu neigen, sich zu krümmen, was ihren Einbau in eine Fassung erschwert. Bei symmetrisch aufgebauten Sensoren stehen die verschiedenen Materialien unter erheblichen Zug- bzw. Druckbelastungen, was in Verbindung mit den schwankenden Temperaturen, denen der Sensor im Laufe seiner Betriebsdauer ausgesetzt ist, zu Rissen in den kera- mischen Schichten und zum Abplatzen von Material führen kann.

Aus US-A 4806 739 ist ein plattenförmiges keramisches Heizelement bekannt, das einen Schichtaufbau aus einem Basissubstrat aus Zr0₂. einer mit einem Siebdruckverfahren aufgetragenen Schicht aus Al₂0₃ einer Leiterbahnschicht und einer äußeren Schutzschicht aus AL₂0₃umfaßt, wobei die Al₂0₃ Schichten dicht gesintert sind. Um eine Durchwölbung dieses Heizelements zu vermeiden, wird empfohlen, die verzerrende Wirkung einer Aluminiumoxydschicht auf einer Seite des Basissubstrats dadurch zu kompensieren, daß eine entsprechende Aluminiumoxydschicht auch auf der anderen Seite des Basissubstrats vorgesehen wird. Auch bei diesem Heizelement unterliegen daher die verwendeten Materialien erheblichen Spannungen.

Eine weitere Abgassonde, mit einer Isolationsschicht, die Porenbildner aufweist, ist aus der De 44 39 883 A1 bekannt.

### Vorteile der Erfindung

Die im Anspruch 1 definierte Abgassonde zeichnet sich demgegenüber dadurch aus, daß durch Einbringen einer gesteuerten Porosität in die Schichten aus aluminiumoxydhaltigem Material deren Elastizität erhöht und damit die in der Sonde wirksamen Materialspannungen auf das Ausmaß vermindert werden können, welches der mechanischen Stabilität der Abgassonde förderlich ist.

Die hierfür erforderliche Menge an Porenbildner kann von der Fühnmg des Sinterprozesses, der Körnung und chemischen Zusammensetzung der zu sinternden Schichten sowie des verwendeten Porenbildners abhängen. Für eine gegebene Kombination dieser Materialien ist es jedoch ohne Schwierigkeiten möglich, einen geeigneten Anteil an Porenbildner experimentell zu ermitteln.

Eine dichtgesinterte Al₂0₃-haltige Schicht läßt sich zuverlässig und reproduzierbar erzeugen, wenn die Aluminiumoxydkomponente des Materials zu wenigstens 80% aus α-Al₂0₃ besteht.

Zwischen der Leiterbahnschicht und den Meßelektroden fließt während des Betriebs des Abgassensors ein Leckstrom. Dieser beruht in Zr0₂ auf der Wanderung von Sauerstoffionen. Die dichtgesinterte Schicht aus Al₂0₃-haltigem Material verhindert den Zutritt von Sauerstoff zur Leiterbahnschicht. Ein Leckstrom zwischen der Leiterbahnschicht und einer der Meßelektroden kann deshalb in Zr0₂ zu einer Abwanderung von Sauerstoff und infolgedessen zu einer Schwarzfärbung des Zr0₂ führen. Um dies zu vermeiden, ist man bestrebt, den Leckstrom möglichst klein zu halten. Zu diesem Zweck ist es vorgesehen, daß das Al₂0₃-haltige Material weniger als 50ppm Natrium enthält.

Als Porenbildner wird dem Al₂0₃ -haltigen Material fein zerteilter Kohlenstoff zugesetzt in Form von Glaskohle. Die kompakt geformten Teilchen der Glaskohle verbrennen während des Sintervorgangs und lassen dabei kompakte, mehr oder weniger sphärische Poren zurück. Um geschlossene Poren zu erhalten, verwendet man Porenbildner mit einer mittleren Teilchengröße von maximal 10 µm. Ferner beträgt der Gehalt der Al₂0₃. haltigen Schichten an Porenbildner vor dem Sintern nicht mehr als 12% des Feststoffanteils dieser Schichten.

Zusätzlich kann zur Verringerung von Spannungen dem Al₂0₃-haltigen Material bis zu 10% Zr0₂ zugesetzt sein.

Um das Sintern des Al₂0₃ haltigen Materials zu erleichtern, kann diesem ein Flußmittel zugesetzt sein, das vorzugsweise Fluor enthält. Dabei kann es sich um ein Fluorsalz eines Alkali- oder Erdalkalimetalls, insbesondere eines schweren Metalls wie Barium, handeln, dessen Ionen in dem gesinterten Al₂0₃-haltigen Material nur wenig wandern, um Ammoniumfluorid oder eine fluororganische Verbindung handeln. Letztere sind insoweit bevorzugt, als sie beim Sintern zerfallen, so daß in dem Al₂0₃-haltigen Material nur das flußvermittelnde Fluor zurückbleibt.

### Figuren

Weitere Merkmale und Vorteile der Erfindung ergeben sich aus den nachfolgenden Beschreibungen von Ausführungsbeispielen mit Bezug auf die beigefügten Figuren.

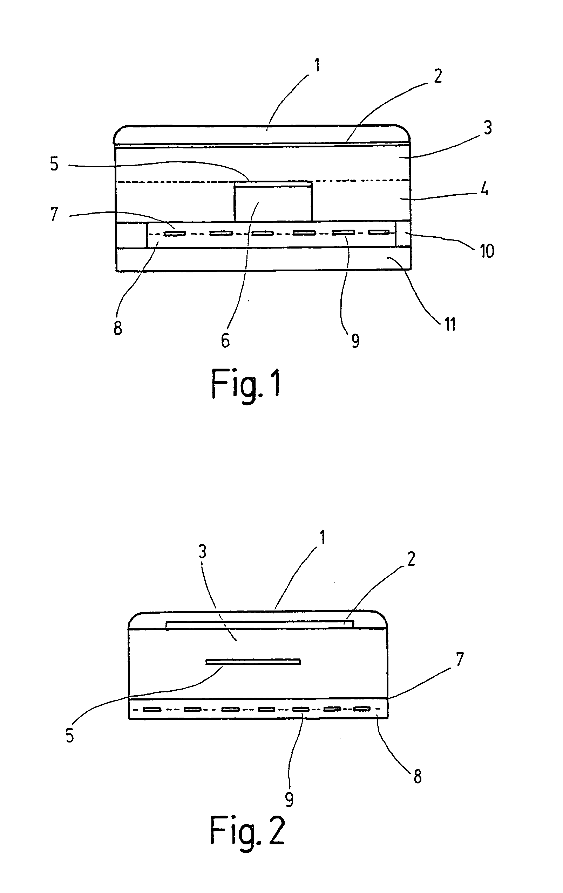

Figuren 1 zeigt eine Abgassonde, die kein Ausführungsbeispiel der vorliegenden Erfindung ist. Figur 2 zeigt ein Ausführungsbeispiel der erfindungsgemäßen Abgassonde schematisch im Querschnitt.

### Beschreibung der bevorzugten Ausgestaltungen

Die in Figur 1 gezeigte Sonde umfaßt eine poröse Schutzschicht 1, die im Betrieb der Sonde mit einem Abgas in Kontakt kommt, eine darunter liegende Nernstelektrode 2, eine dielektrische Schicht 3 zwischen der Nernstelektrode 2 und einer Referenzelektrode, eine Referenzluftkanalfolie 4, aus der unterhalb der Referenzelektrode ein Referenzluftkanal 6 ausgeschnitten ist, zwei Isolationsschichten 7, 8 oberhalb und unterhalb einer Leiterbahnschicht 9, einen Dichtrahmen 10, der die Isolationsschichten 7, 8 nach außen hin dicht umschließt, und eine Trägerfolie 11. Die elektrischen Zuleitungen der Leiterbahnschicht 9 sind in der Figur nicht dargestellt.

Die dielektrische Schicht 3, die Referenzluftkanalfolie 4 und die Trägerfolie 11 werden hergestellt durch Gießen von Folien aus einer Aufschlämmung von Zr0₂ mit einem polymeren Bindemittel. Durch Trocknen erhält man Folien, die weiterverarbeitet werden können. Diese werden zugeschnitten, im Falle der Referenzluftkanalfolie 4 wird der Referenzluftkanal 6 ausgestanzt.

Auf die Trägerfolie 11 werden mit einem Siebdruck oder Spachtelverfahren nacheinander die Isolationsschicht 8, die Leiterbahnschicht 9 und dann die Isolationsschicht 7 aufgetragen. Die Isolationsschichten 7, 8 bestehen aus im wesentlichen reinem α-Al₂0₃(Qualität AKP53 der Fa. Sumitomo) mit einer mittleren Teilchengröße von ca. 0.3µm. Weitere Bestandteile sind ein Bindemittel und ein Porenbildner. Als Porenbildner wird Kohlenstoff, nämlich Glaskohle mit einer Teilchengröße von unter 10 µm in einem Anteil von bis zu 25% der Masse der getrockneten Isolationsschichten verwendet. Die Leiterbahnschicht 9 wird z.B. durch Siebdrucken einer Aufschlämmung von Platinschwamm in Form eines Mäanderbandes auf die Isolationsschicht 8 erzeugt.

Die dielektrische Schicht 3 mit den Elektroden 2 und 5, die Referenzluftkanalfolie 4 und die Trägerfolie 11 mit den Isolationsschichten 7, 8 und der Leiterbahnschicht 9 darauf werden zu einem Stapel laminiert, wobei rings um die Isolationsschichten 7, 8 ein Dichtrahmen 10 angebracht wird, der wie die dielektrische Schicht 3, die Referenzluftkanalfolie 4 und die Trägerfolie im wesentlichen aus Zr0₂ besteht.

Der fertige Stapel mit der Schutzschicht 1 darauf wird daraufhin wärmebehandelt. Dabei verbrennt der polymere Binder der Schichten 3, 4, 11, und bei einer Temperatur von ca. 1000°C beginnt das Zr0₂ zu sintern. Eine Sinterung des Aluminiumoxyds setzt bei ca. 1200°C ein. Während des Sinter- und Abkühlungsvorgangs schrumpfen die Zr0₂-haltigen Schichten und die Al₂0₃-haltigen Isolationsschichten in unterschiedlichem Maße. Die durch diese unter schiedliche Schrumpfung hervorgerufenen Spannungskräfte werden reduziert durch die Porosität der Isolationsschichten 7, 8, die sich durch das Verbrennen des Kohlenstoffs während des Sinterns ergibt. Bei einem hohen Kohlenstoffgehalt von bis zu 25% in dem Material der Isolationsschichten können zum Teil offene Poren entstehen. Um einen Gasaustausch mit der Umgebung des Sensors über diese Poren zu verhindern, sind die Isolationsschichten 7, 8 ringsum durch den Dichtrahmen 10 aus dichtgesintertem Zr0₂ umgeben.

Das Auftreten von Wölbungen wird bei der Abgassonde aus Figur 1 zusätzlich dadurch vermieden, daß die Isolationsschichten 7, 8 auf beiden Seiten von Zr0₂-Schichten umgeben sind, so daß die an gegenüberliegenden Seiten der Isolationsschichten 7, 8 wirksamen Spannungskräfte einander gegenseitig kompensieren.

Figur 2 zeigt ein erstes Ausführungsbeispiel der Erfindung, das aufgrund seines einfachen Aufbaus besonders bevorzugt ist. Diese Ausgestaltung unterscheidet sich von der in Figur 1 gezeigten im wesentlichen dadurch, daß die Trägerfolie 11 und der Dichtrahmen 10 entfallen sind, so daß die Isolationsschicht 8 eine freie Oberfläche der Abgassonde bildet. Bei diesem Ausführungsbeispiel liegt der Gehalt der Isolationsschichten 7 und 8 an Glaskohle vor dem Sintern zwischen 1 und 10%, vorzugsweise bei 5% des Feststoffanteils der Al₂0₃-haltigen Isolationsschichten vor dem Sintern. Durch die Wahl eines Anteils von nicht mehr als 10% ist sichergestellt, daß die sich beim Sintern bildenden Poren geschlossen bleiben, so daß Gaszutritt von außen zur Leiterbahnschicht 9 wirksam unterbunden ist. In diesem Fall ist es nicht aus Gründen der Haltbarkeit der Abgassonde notwendig, diese mit einem Dichtrahmen und einer Trägerfolie aus dichtem Zr0₂ zu umfangen. Durch Verwendung von hinreichend reinem Al₂0₃ wie der genannten Sorte AKP53 lassen sich Leckströme zwischen der Leiterbahnschicht 9 und den Elektroden 2, 5 mit einem Wert von ca. 1 µA reduzieren. Zum Vergleich: bei Verwendung einer anderen zur Herstellung von Abgassonden gebräuchlichen Sorte Aluminiumoxyd, der Qualität CR85 der Fa. Baikowski (mit 3% Si0₂ und 5% BaC0₃ als Flußmittel) werden bei einer entsprechend konstruierten Abgassonde typischerweise Leckströme von 12-13µA beobachtet. Bei diesen herkömmlichen hohen Leckströmen war es erforderlich, frischem Sauerstoff, z. B. von einem Referenzluftkanal, den Zutritt zur Leiterbahnschicht zu ermöglichen, um zu verhindern, daß der in den Zr0₂-Schichten durch Sauerstoffionenwanderung vermittelte Leckstrom zu Sauerstoffverlusten und damit zu einer Schwarzfärbung von Teilen des Zr0₂ führte, was meist eine Beeinträchtigung der Lebensdauer der Abgassonde zur Folge hatte. Bei der erfindungsgemäßen Abgassonde hingegen sind die Leckströme so gering, daß auf diesen Sauerstoffzutritt verzichtet werden kann. Deswegen wird erfindungsgemäß das Aluminiumoxyd der Isolationsschichten 7,8 Schicht gesintert, die die Leiterbahnschicht 9 gegen Sauerstoff abschließt.

Eine solche dichtgesinterte Schicht läßt sich mit Aluminiumoxyd der obengenannten Sorte AKP53 erzeugen, welches zu über 80% aus α-Al₂0₃ besteht. Zu der Verringerung des Leckstroms trägt vermutlich bei, daß die Al₂0₃-haltigen Schichten gemäß der Erfindung einen sehr geringen Na-Gehalt von unter 50 ppm aufweisen, während die bekannten Schichten vermutlich durch den BaC0₃-Anteil mit Na verunreinigt sind, und daß die erfindungsgemäßen Schichten keine Glasphase aus Si0₂ enthalten.

Wie man sieht, hat also die Verwendung von genügend reinem, vor allem natrium-armem Aluminiumoxyd, das vorwiegend in Form von α-Aluminiumoxyd vorliegt, den doppelten Vorteil, daß es sehr geringe Leckströme zwischen der Leiterbahnschicht und den Meßeelektroden ermöglicht, daß deshalb auf die Möglichkeit des Sauerstoffzutritts zur Leiterbahnschicht 9 nicht geachtet werden muß, und daß deshalb die Leiterbahnschicht 9 in dichtgesinterte Isolationsschichten 7, 8 eingeschlossen sein darf, die sich wiederum in günstiger Weise aus α-Aluminiumoxyd erzeugen lassen.

Da bei der Ausgestaltung aus Figur 2 die Trägerfolie aus Zr0₂ entfallen ist, könnte hier das Problem auftreten, daß unterschiedliche Schrumpfungsraten der Zr0₂ -haltigen Schichten und der Al₂0₃ -haltigen Schichten beim Sintern trotz deren Porosität zu einer Restwölbung der fertigen Sonde führen. Diesem Problem kann in unterschiedlicher Weise entgegengewirkt werden. Eine erste Lösung besteht darin, die Isolationsschichten 7, 8 aus einem Gemisch zu sintern, das Al₂0₃und bis zu 10% Zr0₂ enthält. Dies führt zu einer Angleichung des Sinterverhaltens der verschiedenen Schichten.

Eine zweite Lösung ist die, daß man die Isolationsschichten 7, 8 aus Aluminiumoxyd, wie etwa dem genannten Aluminiumoxyd AKP53 herstellt, dem ein Flußmittel, z. B. 0,1 bis 0,5% LiF (Lithiumfluorid), ca. 0,1% BaF₂ (Bariumfluorid), 25 NH₄F (Ammoniumfluorid) oder organisch gebundenes Fluor wie etwa ein Fluoramin zusetzt.

Es wurden Sinterversuche mit auf einer Folie aus polymer gebundenem Zr0₂ gedruckten, Al₂0₃-Schichten mit Zusätzen von Lithiumfluorid bzw. Bariumfluorid mit den genannten Konzentrationen als Flußmittel durchgeführt. Diese Proben zeigten nicht die für Proben ohne Flußmittelzusatz typische Wölbung.

Ein Abgassensor mit der in Figur 2 gezeigten Struktur wurde unter Verwendung von mit Bariumfluorid versetztem Aluminiumoxyd für die Isolationsschich ten 7,8 hergestellt. Dabei .zeigte sich, daß der Bariumfluoridzusatz keine Erhöhung des Leckstroms bewirkt. Es wurde im Mittel ein Leckstrom von ca. 1 µA gemessen.

Bariumfluorid ist unter den Alkali- und Erdalkalifluoriden als Flußmittel bevorzugt, da seine relativ großen und schweren Ionen eine geringe Beweglichkeit in den Isolationsschichten aufweisen und deshalb keinen nennenswerten Leckstrom beitragen. Die Verwendung von Ammoniumfluorid oder organischen Fluorverbindungen als Flußmittel ist ebenfalls zweckmäßig, da diese beim Sintern keine Ionen in der Isolationsschicht zurücklassen.

Die Verwendung von Flußmitteln bzw. die Beimengung von ZR0₂ in den Isolationsschichten 7,8 ist selbstverständlich auch bei der Ausgestaltung aus Figur 1 zur Verringerung von internen Spannungen wirksam.

## Patentansprüche

1. Abgassonde mit zwei durch eine im wesentlichen aus ZrO₂ bestehende dielektrische Schicht (3) getrennten Meßelektroden (2; 5), einer Leiterbahnschicht (9) zum elektrischen Heizen der dielektrischen Schicht (3), wobei die Leiterbahnschicht (9) über eine dichtgesinterte Schicht (7, 8), die zu einer dichten Schicht gesintert ist, die die Leiterbahnschicht (9) gegen Sauerstoff abschließt, aus Al₂O₃-haltigem Material mit der dielektrischen Schicht (3) fest verbunden ist, wobei dem Al₂O₃-haltigen Material vor dem Sintern ein Porenbildner zugesetzt wurde, **dadurch gekennzeichnet, dass** die mittlere Teilchengröße des Porenbildners maximal 10 µm beträgt und dass der Gehalt der A1203-haltigen Schicht an Porenbildner vor dem Sintern nicht mehr als 12 % der Masse des Feststoffanteils der A1203-haltigen Schicht beträgt und dass der Porenbildner Kohlenstoff ist und dass das A1203-haltige Material weniger als 50 ppm Natrium enthält und dass die Al₂O₃-Komponente des Al₂O₃-haltigen Materials zu wenigstens 80 % aus α-Al₂O₃ besteht und dass der Porenbildner fein zerteilter Kohlenstoff ist und dass die dichtgesinterte Schicht (7, 8) geschlossene Poren aufweist und dass die mittlere Teilchengröße des Al₂O₃-haltigen Materials 0,3 µm beträgt und dass die mittlere Teilchengröße des Porenbildners 1 bis 10 µm beträgt und dass der Gehalt an Kohlenstoff bis zu 10% der Masse des Feststoffanteils der A1203-haltigen Schichten (7,8) beträgt, so daß sichergestellt ist, daß die sich beim Sintern bildenden Poren geschlossen bleiben, so daß Gaszutritt von außen zur Leiterbahnschicht 9 wirksam unterbunden ist und dass der feinzerteilte Kohlenstoff Glaskohle ist und dass die Isolationsschichten (7,8) aus im Wesentlichen reinem α-Al2O3 bestehen, optional mit bis zu 10% ZrO₂.

2. Abgassonde nach einem der vorhergehenden Ansprüche, **dadurch gekennzeichnet, daß** dem Al₂O₃-haltigen Material ein Flußmittel zugesetzt ist.

3. Abgassonde nach Anspruch 6, **dadurch gekennzeichnet, daß** das Flußmittel Bariumfluorid, Lithiumfluorid, Ammoniumfluorid oder eine organische Fluorverbindung ist.

## Claims

1. Exhaust gas probe having two measuring electrodes (2; 5) separated by a dielectric layer (3) consisting essentially of ZrO₂, and an interconnect layer (9) for electrically heating the dielectric layer (3), wherein the interconnect layer (9) is firmly connected to the dielectric layer (3) via a densely sintered layer (7, 8), which is sintered to form a dense layer that closes off the interconnect layer (9) from oxygen, made of Al₂O₃-containing material, wherein a pore-forming agent has been added to the Al₂O₃-containing material before the sintering, **characterized in that** the mean particle size of the pore-forming agent is at most 10 µm, and **in that** the pore-forming agent content of the Al₂O₃-containing layer before the sintering amounts to not more than 12% of the mass of the solids content of the Al₂O₃-containing layer, and **in that** the pore-forming agent is carbon, and **in that** the Al₂O₃-containing material contains less than 50 ppm sodium, and **in that** the Al₂O₃ component of the Al₂O₃-containing material consists of α-Al₂O₃ to an extent of at least 80%, and **in that** the pore-forming agent is finely divided carbon, and **in that** the densely sintered layer (7, 8) has closed pores, and **in that** the mean particle size of the Al₂O₃-containing material is 0.3 µm, and **in that** the mean particle size of the pore-forming agent is 1 to 10 µm, and **in that** the carbon content amounts to up to 10% of the mass of the solids content of the Al₂O₃-containing layers (7, 8), such that it is ensured that the pores which form during the sintering remain closed, so that the admission of gas from the outside to the interconnect layer (9) is effectively prevented, and **in that** the finely divided carbon is glassy carbon, and **in that** the insulation layers (7, 8) consist of substantially pure α-Al₂O₃, optionally with up to 10% ZrO₂.

2. Exhaust gas probe according to Claim 1, **characterized in that** a fluxing agent is added to the Al₂O₃-containing material.

3. Exhaust gas probe according to Claim 2, **characterized in that** the fluxing agent is barium fluoride, lithium fluoride, ammonium fluoride or an organic fluorine compound.

## Revendications

1. Sonde pour gaz d'échappement avec deux électrodes de mesure (2; 5) séparées par une couche diélectrique (3) composée essentiellement de ZrO₂, une couche de piste conductrice (9) pour le chauffage électrique de la couche diélectrique (3), dans laquelle la couche de piste conductrice (9) est assemblée de façon solide à la couche diélectrique (3) au moyen d'une couche frittée compacte en un matériau contenant du Al₂O₃, qui est frittée en une couche compacte qui isole la couche de piste conductrice (9) par rapport à l'oxygène, dans laquelle un agent porogène a été ajouté au matériau contenant du Al₂O₃ avant le frittage, **caractérisée en ce que** la taille moyenne des particules de l'agent porogène vaut au maximum 10 µm et **en ce que** la teneur de la couche contenant du Al₂O₃ en agent porogène avant le frittage ne vaut pas plus de 12 % de la masse de la fraction solide de la couche contenant du Al₂O₃ et **en ce que** l'agent porogène est le carbone et **en ce que** le matériau contenant du Al₂O₃ contient moins de 50 ppm de sodium et **en ce que** le composant Al₂O₃ du matériau contenant du Al₂O₃ se compose à raison de 80 % de α-Al₂O₃ et **en ce que** l'agent porogène est du carbone finement divisé et **en ce que** la couche frittée compacte présente des pores fermés et **en ce que** la taille moyenne des particules du matériau contenant du Al₂O₃ vaut de 1 à 10 µm et **en ce que** la teneur en carbone vaut jusqu'à 10 % de la masse de la fraction solide des couches contenant du Al₂O₃ (7, 8), de façon à assurer que les pores se formant lors du frittage restent fermés, de telle manière qu'une entrée de gaz de l'extérieur jusqu'à la couche de piste conductrice (9) soit efficacement empêchée, et **en ce que** le carbone finement divisé est du carbone vitreux et **en ce que** les couches d'isolation (7, 8) se composent de α-Al₂O₃ essentiellement pur, optionnellement avec jusqu'à 10 % de ZrO₂.

2. Sonde pour gaz d'échappement selon la revendication 1, **caractérisée en ce qu'**un agent fondant a été ajouté au matériau contenant du Al₂O₃.

3. Sonde pour gaz d'échappement selon la revendication 2, **caractérisée en ce que** l'agent fondant est le fluorure de baryum, le fluorure de lithium, le fluorure d'ammonium ou un composé fluoré organique.
